# EUROPEAN PATENT APPLICATION

(11) **EP 1 568 904 A1**
(43) Date of publication of application: **31.08.2005**
(21) Application number: 05251068.2
(22) Date of filing: 23.02.2005
(51) Int. Cl.: F16C 35/063, F16D 1/06, F16K 1/22

(54) **Press-fit shaft and method**

(30) Priority: 27.02.2004 US 548510 P; 10.02.2005 US 55239
(71) Applicant: BorgWarner Inc., Auburn Hills, MI 48326-1782 (US)
(72) Inventor: Pringle, Hal E., Bloomfield Michigan 48032 (US)
(74) Representative: Lerwill, John

(57) **Abstract**

A shaft member (16) and method of forming and using the same, wherein a portion of the external surface thereof is provided with a raised surface (36). The raised surface portion (38) of the shaft member (16) is intended to frictionally engage and form an interference fit with a surface of an inner race (18A, 20A) of one or more bearing members (18, 20).

## Description

### FIELD OF THE INVENTION

The present invention generally relates to shaft members and more particularly to a shaft member having at least one area formed thereon consisting of a plurality of raised members, wherein the raised members are intended to frictionally engage and form an interference fit with an inner race of a bearing member.

### BACKGROUND OF THE INVENTION

Conventional throttle bodies are used for metering airflow in an internal combustion engine. Typically, these throttle bodies include a valve plate member, such as those characterized as being butterfly-shaped, that is mounted to a shaft member which is rotationally positioned in an intake bore. The shaft member is typically rotationally coupled to the valve body by way of one or more bearing members.

One problem that can occur between the shaft member and the bearing members is when there is any significant clearance between the outer surface of the shaft member and the surface of the inner race of the bearing member. For example, clearance between the shaft member and the bearing members can cause voltage disturbances in the shaft position sensor (SPS) during certain vehicle operational states, such as transients through the limp home position.

Because of this problem, very tight tolerances have been engineered between the outer diameter of the shaft member and the diameter of the inner race of the respective bearing members. Typically, when the shaft member is pressed into the inner race of the respective bearing member, it is necessary to back up the bearing member so as to avoid damaging the bearing member with the substantial press forces.

Another problem that can arise is thermal growth of the system, e.g., during operation of the vehicle. Because the shaft endplay control system is typically located at the opposite end of the intake bore from the SPS, there is a resultant large amount of thermal growth present in the system. This in turn can affect the performance of the SPS.

Accordingly, there exists a need for a new and improved shaft member, and method for forming and using the same, in order to overcome at least some of the aforementioned deficiencies. Additionally, there exists a need for a new and improved shaft member/bearing member system, and method for forming and using the same, in order to overcome at least some of the aforementioned deficiencies. Furthermore, there exists a need for a new and improved throttle body, and method for forming and using the same, in order to overcome at least some of the aforementioned deficiencies.

### SUMMARY OF THE INVENTION

The present invention preferably provides a new and improved shaft member.

In accordance with a first embodiment of the present invention, a shaft member is provided, wherein the shaft member has an external surface including at least one area having a plurality of raised members formed thereon.

In accordance with a second embodiment of the present invention, a throttle body system is provided, comprising: (1) a shaft member, wherein the shaft member has an external surface including at least one area having a plurality of raised members formed thereon; and (2) at least one bearing member having an area defining an aperture formed therein, wherein the raised surfaces are operable to engage the aperture.

In accordance with a third embodiment of the present invention, a throttle body system is provided, comprising: (1) a shaft member, wherein the shaft member has an external surface including at least one area having a plurality of raised members formed thereon; (2) a throttle plate member engaged to the shaft member; and (3) at least one bearing member having an area defining an aperture formed therein, wherein the raised surfaces are operable to engage the aperture.

In accordance with a fourth embodiment of the present invention, a throttle valve system is provided, comprising: (1) a throttle body; (2) a shaft member rotationally engaged with the throttle body, wherein the shaft member has an external surface including at least one area having a plurality of raised members formed thereon; (3) a throttle plate member engaged to the shaft member; and (4) at least one bearing member having an area defining an aperture formed therein, wherein the raised surfaces are operable to engage the aperture.

Further areas of applicability of the present invention will become apparent from the detailed description provided hereinafter. It should be understood that the detailed description and specific examples, while indicating the preferred embodiment of the invention, are intended for purposes of illustration only and are not intended to limit the scope of the invention.

### BRIEF DESCRIPTION OF THE DRAWINGS

The present invention will become more fully understood from the detailed description and the accompanying drawings, wherein:

Figure 1 is a sectional view illustrating a valve body, in accordance with the general teachings of the present invention;

Figure 2 is a perspective view of a shaft member, in accordance with the general teachings of the present invention;

Figure 3 is a partial sectional view of the shaft member depicted in Fig. 2 engaged to a bearing member, in accordance with the general teachings of the present invention;

Figure 4 is a partial sectional view of the shaft member and bearing members depicted in Fig. 3 engaged to a throttle body, in accordance with the general teachings of the present invention;

Figure 5 is a partial sectional view of the shaft member depicted in Fig. 2 engaged to a bearing member, in accordance with the general teachings of the present invention; and

Figure 6 is a sectional view of the shaft member depicted in Fig. 2 engaged to a bearing member, in accordance with the general teachings of the present invention.

The same reference numerals refer to the same parts throughout the various Figures.

### DETAILED DESCRIPTION OF THE PREFERRED EMBODIMENTS

The following description of the preferred embodiment(s) is merely exemplary in nature and is in no way intended to limit the invention, its application, or uses.

By way of a non-limiting example, the present invention can be practiced with any type of actuator system, including but not limited to throttle bodies, EGR systems, turbocharger systems, and/or the like. Furthermore, the present invention can be practiced with any type of shaft member and the like that is intended to be received within a bearing member and the like. Additionally, the present invention can be practiced with any type of frictional engagement and/or interference fit between two or more members and the like.

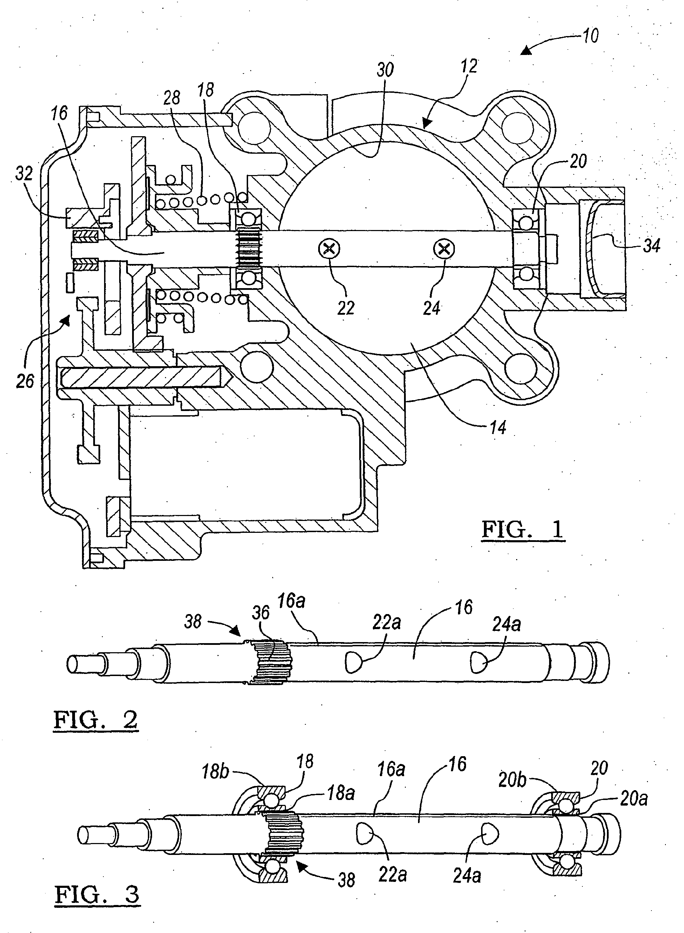

Referring generally to the Figures, and more specifically to Fig. 1, a valve body that includes the present invention is generally shown at 10. Shown herein, the invention is preferably used in an illustrative throttle body, generally indicated at 12, of an engine. The engine may be of the internal combustion variety; however, it is envisioned that the present invention with be compatible with other types of engines, as well.

Valve body 10 preferably includes a valve plate member 14 mounted on a selectively rotatable shaft member 16. The shaft member 16 is preferably rotationally coupled with the throttle body 12 by way of at least one bearing member 18, and still more at least two bearing members 18 and 20, respectively. By way of a non-limiting example, the bearing members 18, 20, respectively, are preferably of the "ball-bearing" type. These types of bearing are preferably provided with an inner race, 18A, 20A, respectively, and an outer race 18B, 20B, respectively. However, it should be appreciated that the present invention can be practiced with various combinations of bearing members types.

The valve plate member 14 is preferably secured to the shaft member 16 by one or more fastening members 22, 24, respectively, such as but not limited to screws, bolts, and the like, through apertures 22A, 24A, formed on shaft member 16. An optional slot 16A formed through the shaft member 16 allows for the valve plate member 14 to be properly positioned relative to the shaft member 16 so as to be operable to receive the fastening members 22, 24, respectively.

The throttle body 12 preferably includes a valve actuation side (e.g., control side chamber), generally shown at 26. In this embodiment, the control side chamber 26 includes an electronic throttle control body that preferably includes drive gears or the like, contained in control side chamber 26, and a return spring mechanism generally shown at 28.

Valve plate member 14 is preferably located in an intake chamber 30 (e.g., bore) in the throttle body 12 and is preferably operable to control airflow therethrough in response to the rotational movement of the shaft member 16.

An optional shaft position sensor 32 is preferably operatively associated with at least one portion of the shaft member 16 so as to be preferably operable to sense and/or communicate the position thereof. Although the location of the shaft position sensor 32 is shown as being adjacent to the control side chamber 26, it should be appreciated that the location of the shaft position sensor 32 can be modified. Additionally, one or more optional seal members 34 may preferably be used to seal the various surfaces and openings of the valve body 10.

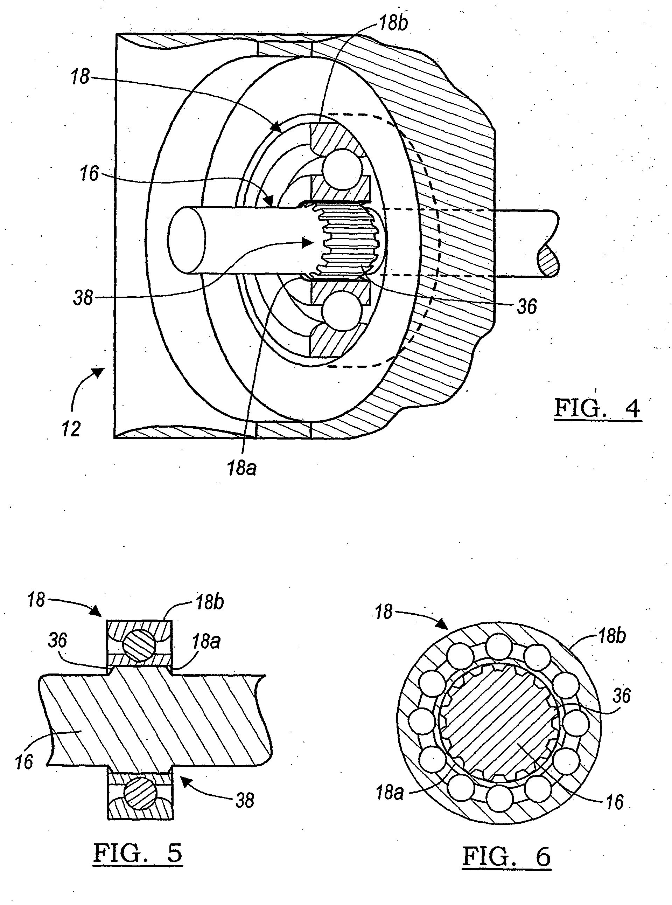

Again referring generally to the Figures, and more specifically to Figs. 2-6, at least a portion of an external surface of the shaft member 16 is provided with a plurality of raised members 36 formed or otherwise disposed thereon. The raised members 36 may include, without limitation, splines, ridges, protuberances of various configurations, and the like. The raised members 36 preferably extend beyond the axial diameter of the portion of the shaft member 16 that does not contain any raised member. That is, the raised members 36 preferably extend above the surface of the shaft member 16 as compared to the relatively smooth portions of the shaft member 16.

In accordance with a preferred embodiment of the present invention, the raised members 36 preferably extend along the entire circumference of the shaft member 16. However, it is envisioned that other configurations can be practiced in accordance with the present invention. By way of a non-limiting example, the raised members 36 may be arranged in a non-continuous manner wherein some raised members 36 are substantially spaced from an adjacent raised member 36.

The exact location of the raised members 36 is not thought to be critical to the success of the present invention, provided that the raised members 36 are located in proximity to a location wherein the shaft member 16 is to engage one of the bearing members, 18, 20, respectively. In accordance with a preferred embodiment of the present invention, one engagement surface 38, including raised members 36, is provided for at least one of the bearing members, 18, 20, respectively.

Without being bound to a particular theory of the operation of the present invention, it is intended to form an interference fit between the raised members 36 of the engagement surface 38 with either one of the inner races 18A, 20A, respectively, of the bearing members 18, 20. In accordance with a preferred embodiment of the present invention, the raised members 36 preferably provide a press compliant surface minimizing the press force required while maintaining a solid joint.

By way of a non-limiting example, the shaft member 16 is manipulated so as to place the engagement surface 38 into either of the inner races 18A, 20A, respectively, so as to allow the raised surfaces 36 to contact and engage (e.g., frictionally) the surface of one of the inner races 18A, 20A, respectively. Alternatively, either of the bearing members 18, 20, respectively, could be manipulated so as to slide over the shaft member 16 so as to contact and engage (e.g., frictionally) the raised members 36 of either of the engagement surface 38. This contact allows an interference fit to be formed between the raised surfaces 36 and the surface of the inner races 18A, 20A, respectively.

In this manner, a secure, stable and tight fit is achieved between the shaft member 16 and either of the bearing members 18, 20, respectively, without the need to resort to a back-up for the bearing member and without any damage occurring to the bearing member due to excessive press forces being applied thereto.

The description of the invention is merely exemplary in nature and, thus, variations that do not depart from the gist of the invention are intended to be within the scope of the invention. Such variations are not to be regarded as a departure from the spirit and scope of the invention.

## Claims

1. A shaft member (16), wherein the shaft member (16) has an external surface including at least one area having a plurality of raised members (36) formed thereon.

2. The invention according to claim 1, further comprising at least one bearing member (18, 20) having an area defining an inner race (18A, 20A), wherein the raised surfaces (36) are operable to engage the inner race (18A, 20A).

3. A throttle body system (10), comprising:
a shaft member (16), wherein the shaft member (16) has an external surface including at least one area having a plurality of raised members (36) formed thereon; and
at least one bearing member (18, 20) having an area defining an inner race (18A, 20A);
wherein the raised surfaces (36) are operable to engage the inner race (18A, 20A).

4. The invention according to claim 1, 2 or 3, wherein the plurality of raised members (36) extend substantially completely around a circumferential surface of the shaft member (16).

5. The invention according any one of claims 1 to 4, further comprising a throttle plate member (14) engaged to the shaft member (16).

6. The invention according to any one of claims 1 to 5, further comprising a throttle body (12), wherein the shaft member (16) is rotationally engaged with the throttle body (12).

7. The invention according to any one of claims 1 to 6, wherein the raised surfaces (36) comprise at least one spline member.

8. The invention according to any one of claims 1 to 7, wherein the shaft member (16) is operable to be incorporated into a device selected from the group consisting of exhaust gas recirculation systems, turbocharger systems, and combinations thereof.

9. A shaft assembly comprising a shaft member (16) having an external surface including an area including a plurality of raised members (36) formed thereon, and a member (18A, 20A) having a cylindrical inner surface engaged or engageable with an interference fit around the shaft member (16) at the area of the raised members (36).
